(19) Europäisches Patentamt
European Patent Office
Office européen des brevets

(11) **EP 2 491 406 B1**

(12) **FASCICULE DE BREVET EUROPEEN**

(45) Date de publication et mention de la délivrance du brevet:
**21.09.2016 Bulletin 2016/38**

(21) Numéro de dépôt: **10776608.1**

(22) Date de dépôt: **20.10.2010**

(51) Int Cl.:
*G01P 15/12* (2006.01)    *G01P 15/08* (2006.01)

(86) Numéro de dépôt international:
**PCT/EP2010/065780**

(87) Numéro de publication internationale:
**WO 2011/048132 (28.04.2011 Gazette 2011/17)**

(54) **CAPTEUR A DETECTION PIEZORESISTIVE DANS LE PLAN**

SENSOR FÜR PIEZORESISTIVE DETEKTION AUF GLEICHER EBENE

SENSOR FOR IN-PLANE PIEZORESISTIVE DETECTION

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **23.10.2009 FR 0957462**

(43) Date de publication de la demande:
**29.08.2012 Bulletin 2012/35**

(73) Titulaire: **Commissariat à l'Énergie Atomique et aux Énergies Alternatives
75015 Paris (FR)**

(72) Inventeurs:
• **ROBERT, Philippe
F-38000 Grenoble (FR)**
• **HENTZ, Sébastien
F-38000 Grenoble (FR)**

(74) Mandataire: **Ilgart, Jean-Christophe et al
Brevalex
95, rue d'Amsterdam
75378 Paris Cedex 8 (FR)**

(56) Documents cités:
WO-A1-92/15018    US-A- 3 209 601
US-A- 4 809 552    US-A- 6 145 380
US-A1- 2006 201 251

• **AIKELE M ET AL: "Resonant accelerometer with self-test", SENSORS AND ACTUATORS A, ELSEVIER SEQUOIA S.A., LAUSANNE, CH LNKD-DOI:10.1016/S0924-4247(01)00558-1, vol. 92, no. 1-3, 1 août 2001 (2001-08-01) , pages 161-167, XP004274041, ISSN: 0924-4247**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

EP 2 491 406 B1

## Description

### DOMAINE TECHNIQUE ET ART ANTÉRIEUR

La présente invention se rapporte à un capteur à détection piézorésistive dans le plan.

Le domaine de l'invention est notamment celui des micro/nano-capteurs, des accéléromètres et des capteurs inertiels.

Un capteur est dit dans le plan, lorsque l'axe sensible de déplacement de la masse sismique ou mobile se situe dans un plan parallèle au substrat, par opposition à un capteur hors plan dans lequel la masse sismique se déplace selon une direction perpendiculaire au substrat.

Il existe des accéléromètres MEMS (systèmes microélectromécaniques) ou NEMS (systèmes nanoélectromécaniques) comportant une masse sismique suspendue munie de doigts, lesdits doigts étant interdigités avec des doigts portés par une partie fixe. La variation de capacité entre les doigts est mesurée et permet de déterminer le déplacement de la mase et d'accéder à l'accélération de la masse.

On cherche à réduire la taille de ces systèmes, or en réduisant les dimensions, on tend également à réduire la sensibilité des systèmes. En effet, on tend à une « rigidification relative » de la structure par rapport aux forces d'inertie.

Il existe également un accéléromètre de type comportant une masse sismique destinée à se déplacer sous l'effet de forces extérieures, suspendue par une poutre formant un axe de rotation pour la masse et une ou plusieurs jauges piézorésistives aptes à détecter le déplacement de la masse sismique. Un tel accéléromètre est connu du document US 2007/0084041 et de l'article « Single-mask SOI fabrication process for linear and angular piezoresistive accelerometers with on-chip reference resistors » - Jesper Eklund, E. ; Sheke1, A.M. - Sensors, 2005 IEEE - 30 Oct.-3 Nov. 2005 Page(s): 656-659.

L'accéléromètre décrit dans ces documents comporte une masse sismique suspendue par une poutre définissant une charnière et deux jauges piézorésistives disposées de part et d'autre de la poutre et parallèles à celle-ci. Cet accéléromètre est destiné à mesurer les accélérations dans le plan de la structure et orthogonal à la poutre.

D'une part cet accéléromètre présente une faible sensibilité.

La demande internationale WO 92/15018 décrit un accéléromètre comprenant des jauges de contrainte piézorésistives suspendues entre une masse sismique et un substrat. Un moyen de suspension et d'articulation de la masse sismique est prévu en une zone distincte de celles par lesquelles les jauges suspendues sont reliées au substrat. Le brevet US-4 809 552 décrit un capteur de force dans lequel des jauges de contrainte piézorésistives sont arrangées entre une masse et un substrat, et dans lequel l'axe des jauges de contrainte est orthogonal au plan contenant l'axe de pivot et le centre de gravité de la masse sismique.

D'autre part, cet accéléromètre est très sensible aux accélérations transverses, i.e. orientées parallèlement à l'axe de la poutre, puisque l'axe sensible des jauges piézorésistives est parallèle à cette direction transverse.

C'est par conséquent un but de la présente invention d'offrir un dispositif à détection piézorésistives dans le plan de sensibilité augmentée, tout en offrant une sensibilité réduite aux

### EXPOSÉ DE L'INVENTION

Le but précédemment énoncé est atteint par un dispositif à détection piézorésistive dans le plan, comportant une masse sismique suspendue par au moins une poutre formant également une liaison pivot d'axe orthogonal au plan du dispositif, la masse étant apte à se déplacer dans le plan autour de cet axe, et au moins une jauge piézorésistive. La ou les jauge(s) présente(nt) une épaisseur réduite par rapport à celle de la masse sismique, l'axe reliant l'axe de liaison pivot et le centre de gravité de la masse sismique est perpendiculaire à la direction des accélérations à mesurer et l'axe de la jauge est perpendiculaire à l'axe reliant l'axe de liaison pivot et le centre de gravité de la masse sismique.

L'épaisseur réduite de la jauge piézorésistive permet une concentration de contraintes, augmentant sa sensibilité. De plus, la jauge piézorésistive étant très peu sensible en flexion, la disposition particulière de la jauge rend le dispositif très peu sensible aux déplacements transverses. Cette faible sensibilité aux accélérations transverses est encore accentuée par la configuration particulière de l'axe de rotation de la masse sismique et du centre de gravité de la masse sismique.

La présente invention a alors principalement pour objet un dispositif de détection MEMS ou NEMS dans le plan destiné à mesurer des déplacements orientés selon une direction comportant une masse sismique suspendue par rapport à un substrat, ladite masse sismique étant apte à pivoter autour d'un axe perpendiculaire au plan du substrat, au moins une jauge de contrainte piézorésistive suspendue entre la masse sismique et le substrat, et reliée directement mécaniquement et électriquement d'une part à la masse sismique et d'autre part à un plot d'encastrement ancré au substrat, la masse sismique étant elle-même suspendue par rapport au substrat par au moins une poutre, ladite au moins une poutre étant reliée au substrat en une zone distincte de celle par laquelle la jauge est reliée au substrat, dans lequel ladite jauge piézorésistive présente une épaisseur inférieure à celle de la masse sismique, et dans lequel l'axe de la jauge piézorésistive est orthogonal au plan contenant l'axe du pivot et le centre de gravité de la masse sismique et ledit plan étant orthogonal à la direction des déplacements à mesurer, i.e. l'axe de la jauge est parallèle à la direction des accélération à détecter.

De manière particulièrement avantageuse, la liaison mécanique entre la jauge piézorésistive et la masse sismique se situe sur ou au plus près du plan contenant le centre de gravité et l'axe du pivot.

Par exemple, la masse sismique comporte un évidement recevant l'extrémité de la jauge destinée à être connectée à la masse sismique, ladite extrémité de la jauge étant connectée au fond de l'évidement, le fond de l'évidement se situant dans le plan contenant le centre de gravité et l'axe du pivot ou au plus près.

On peut prévoir avantageusement que la masse sismique comporte une zone effilée dans le plan de la masse sismique au niveau de sa connexion avec la jauge piézorésistive.

L'épaisseur de la masse sismique et celle de la jauge piézorésistive sont avantageusement comprises entre quelques dizaines de $\mu$m et quelques centaines de $\mu$m.

Le plan contenant l'axe du pivot et le centre de gravité forme avantageusement un plan de symétrie pour des moyens de suspension de la masse sismique.

Par exemple, les moyens maintenant la masse sismique suspendue et portant l'axe de rotation de la masse comportent au moins une poutre présentant une épaisseur supérieure ou égale à celle de la jauge piézorésistive et inférieure à celle de la masse sismique.

Dans un exemple avantageux, la au moins une poutre des moyens maintenant la masse sismique suspendue et portant l'axe de rotation de la masse est disposée sensiblement dans le plan contenant le centre de gravité, parallèle au plan du substrat.

Dans un autre exemple de réalisation, les moyens maintenant la masse sismique suspendue et portant l'axe de rotation de la masse comportent au moins une poutre présentant une épaisseur égale à l'épaisseur de la masse sismique.

Lesdits moyens maintenant la masse sismique suspendue et portant l'axe de rotation de la masse peuvent comporter deux poutres sensiblement de mêmes longueurs ancrées sur le substrat en deux points distincts et ancrées sur la masse sismique en un point par lequel passe l'axe du pivot.

Le dispositif de détection MEMS ou NEMS dans le plan selon l'invention peut avantageusement comporter deux jauges piézorésistives montées en différentiel symétriquement par rapport audit plan. Le montage des deux jauges piézorésistives montées en différentiel est associé à un montage en demi-pont de Wheatstone.

La présente invention a également pour objet un procédé de réalisation d'un dispositif de détection MEMS ou NEMS dans le plan selon la présente invention, ce procédé comportant :

- la formation d'une première zone mince, présentant une première épaisseur formant au moins une jauge piézoélectrique.
- la formation d'une deuxième zone épaisse, présentant une deuxième épaisseur supérieure à la première épaisseur, formant au moins une masse sismique.

La première zone mince peut être réalisée par la formation d'une portion d'une deuxième couche sacrificielle au sein d'une couche de matériau semi-conducteur, et de gravure de cette portion et d'une première couche sacrificielle.

La formation d'une portion d'une deuxième couche sacrificielle au sein d'une couche de matériau semi-conducteur peut comporter :

- la gravure d'une première couche de matériau semi-conducteur située sur la première couche sacrificielle,
- le dépôt et la gravure de la deuxième couche sacrificielle pour définir ladite portion,
- la réalisation d'une deuxième couche de matériau semi-conducteur.

Dans un exemple de réalisation, la réalisation de la deuxième couche de matériau semi-conducteur est obtenue par croissance épitaxiale.

Dans un autre exemple de réalisation, la deuxième couche de matériau semi-conducteur est du semi-conducteur polycristallin.

La formation d'une troisième zone, dite zone charnière, d'épaisseur peut avoir lieu entre la formation de la première zone et la formation de la deuxième zone.

Par exemple, la première zone et la troisième zone sont obtenues par des étapes de gravure indépendantes l'une de l'autre. La gravure de la troisième zone peut être effectuée avant la gravure des première et deuxième zones, par exemple par DRIE.

**BRÈVE DESCRIPTION DES DESSINS**

La présente invention sera mieux comprise à l'aide de la description qui va suivre et des dessins en annexe sur lesquels :

- les figures 1A et 1B sont des vues de dessus et de côté respectivement d'un premier mode de réalisation d'un dispositif selon la présente invention,
- la figure 2 est une vue de dessus d'une variante du dispositif des figures 1A et 1B,
- la figure 3 est une vue de dessus d'un premier exemple d'un deuxième mode de réalisation avantageux d'un dispositif de détection dans le plan selon la présente invention,

- la figure 4 est une vue de dessus d'un deuxième exemple du deuxième mode de réalisation d'un dispositif de détection selon la présente invention,
- la figure 5 est une vue de côté d'une variante du dispositif de la figure 4, dans laquelle l'épaisseur de la charnière est réduite par rapport à celle de la masse sismique,

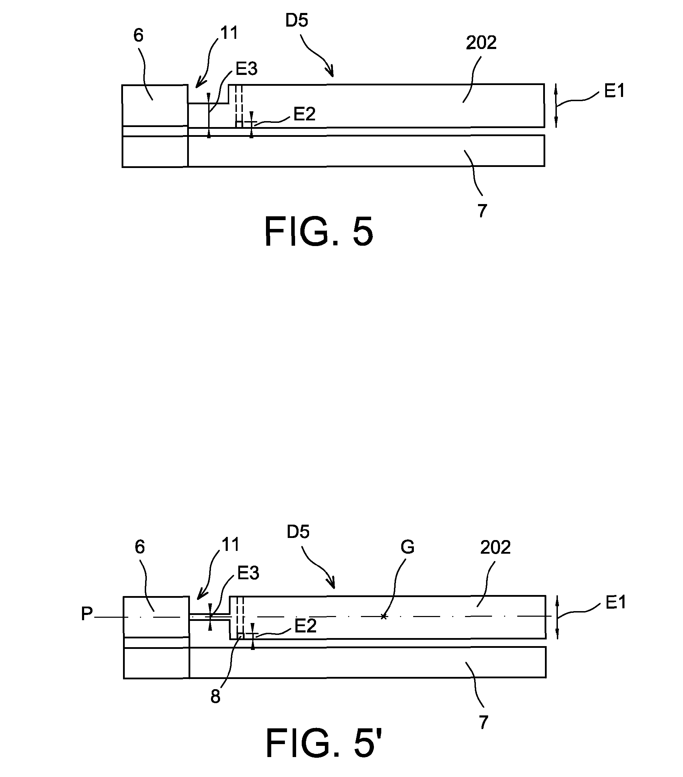

- la figure 5' est une variante du dispositif de la figure 5,

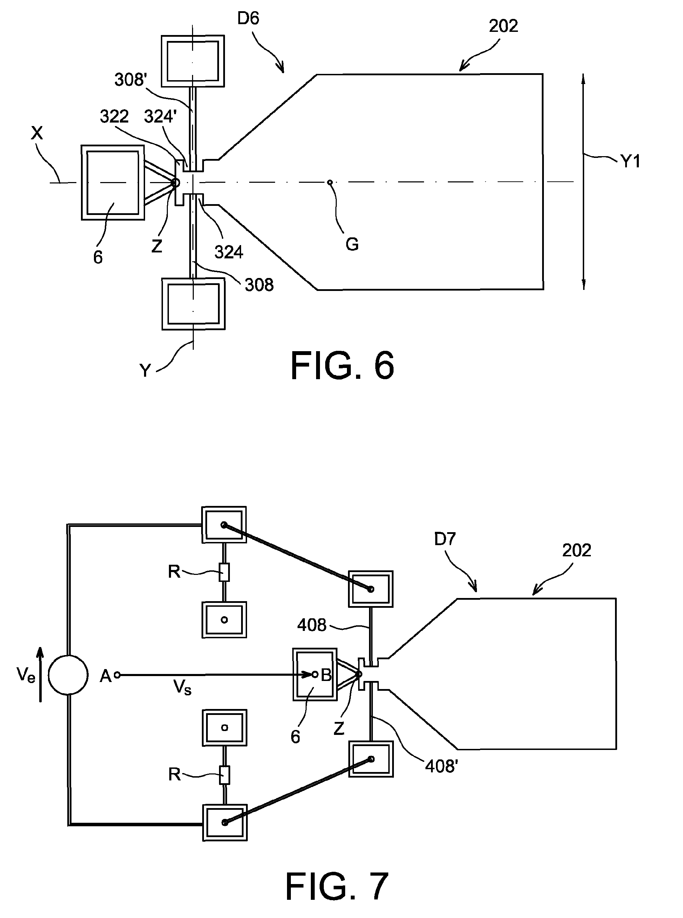

- la figure 6 est une vue de dessus d'un dispositif de mesure selon le deuxième mode de réalisation, les jauges piézorésistives étant montées en différentiel,
- la figure 7 est une vue de dessus d'un dispositif de mesure selon le deuxième mode de réalisation munis de jauges piézorésistives différentielles montées en pont de Wheatstone,

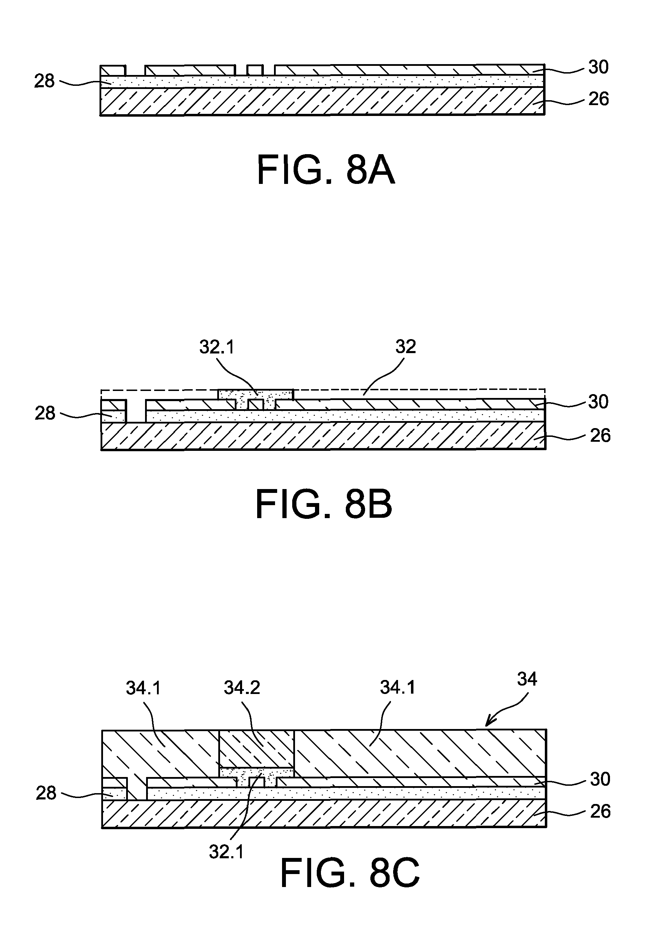

- les figures 8A à 8G sont des représentations schématiques des étapes d'un premier exemple de procédé de réalisation du dispositif selon la présente invention selon,

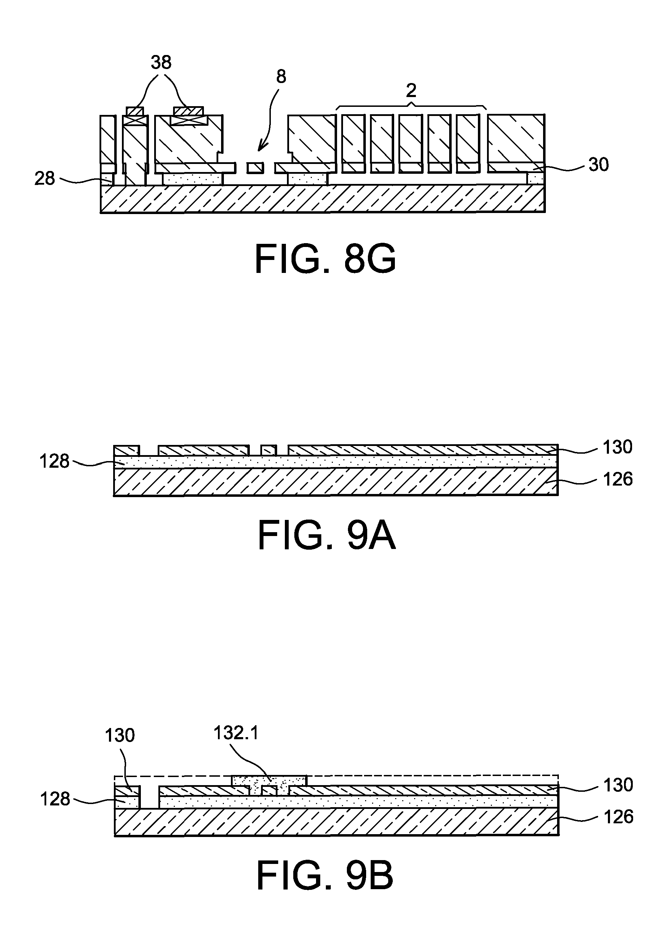

- les figures 9A à 9G sont des représentations schématiques des étapes d'un deuxième exemple de procédé de réalisation du dispositif selon la présente invention selon,

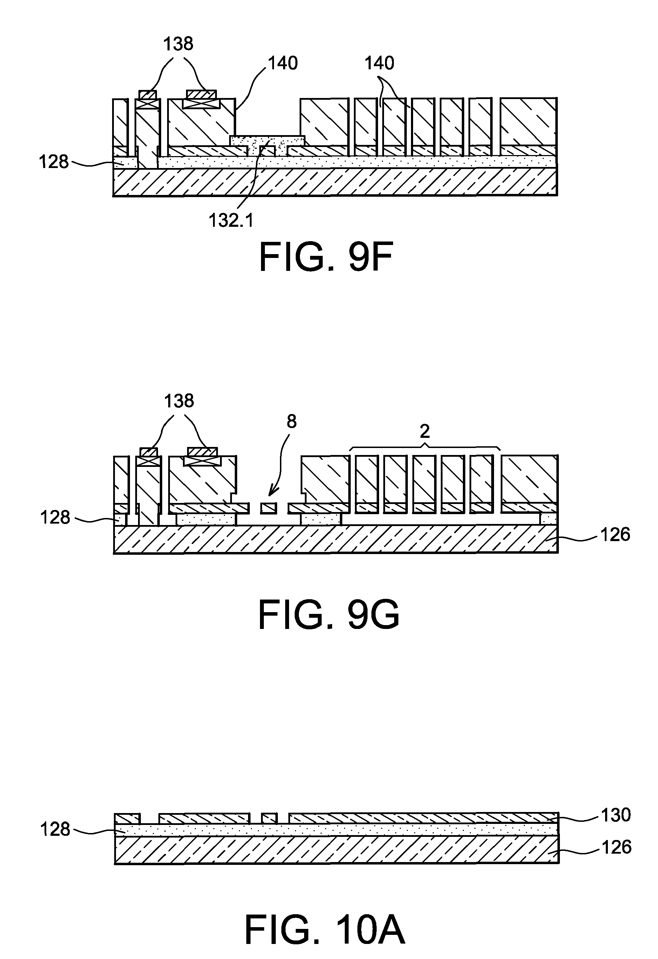

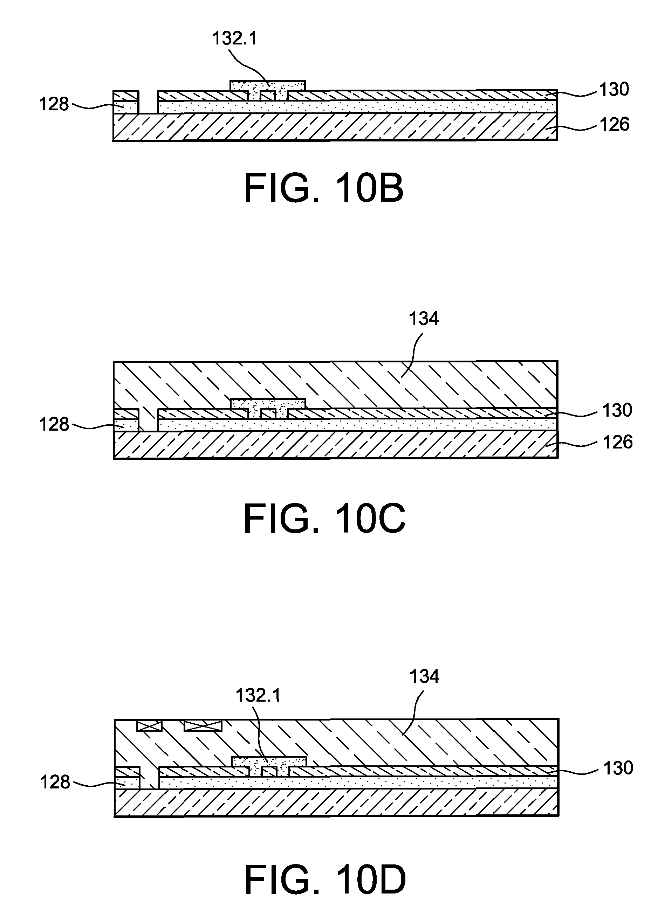

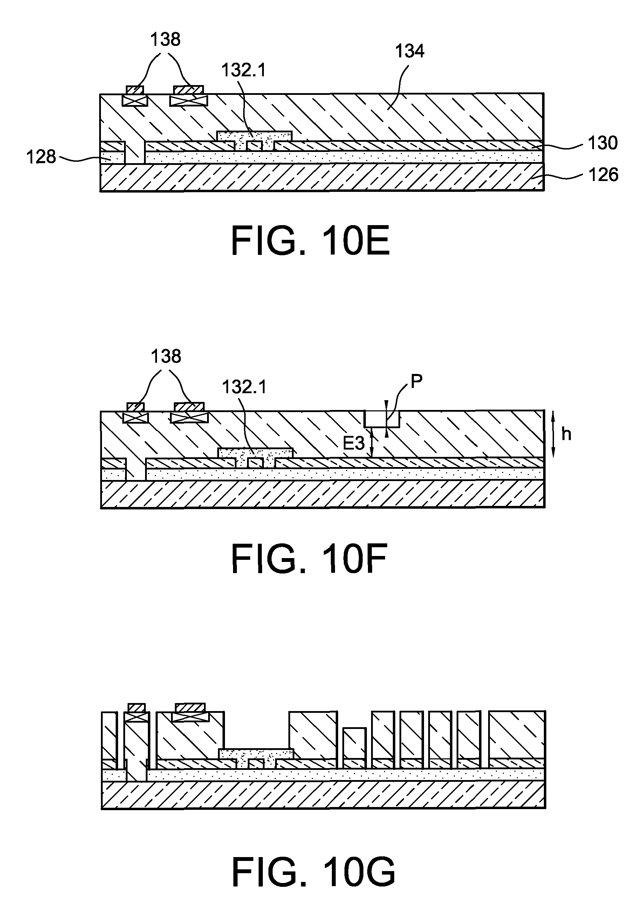

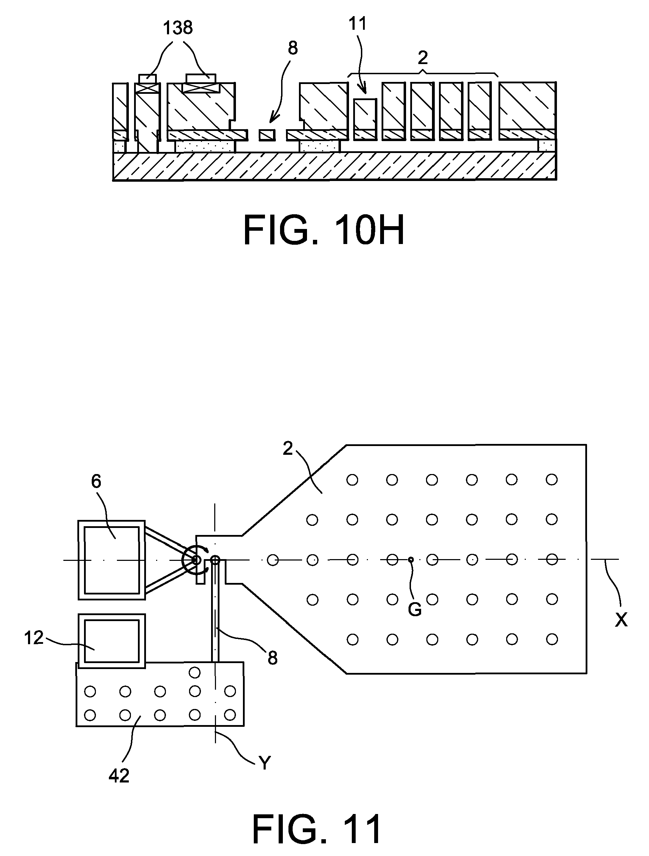

- les figures 10A à 10H sont des représentations schématiques des étapes d'un troisième exemple de procédé de réalisation du dispositif selon la présente invention, permettant de réaliser une charnière d'épaisseur réduite par rapport à celle de la masse,
- la figure 11 est une vue de dessus d'un autre exemple de réalisation du deuxième mode de réalisation.

## EXPOSÉ DÉTAILLÉ DE MODES DE RÉALISATION PARTICULIERS

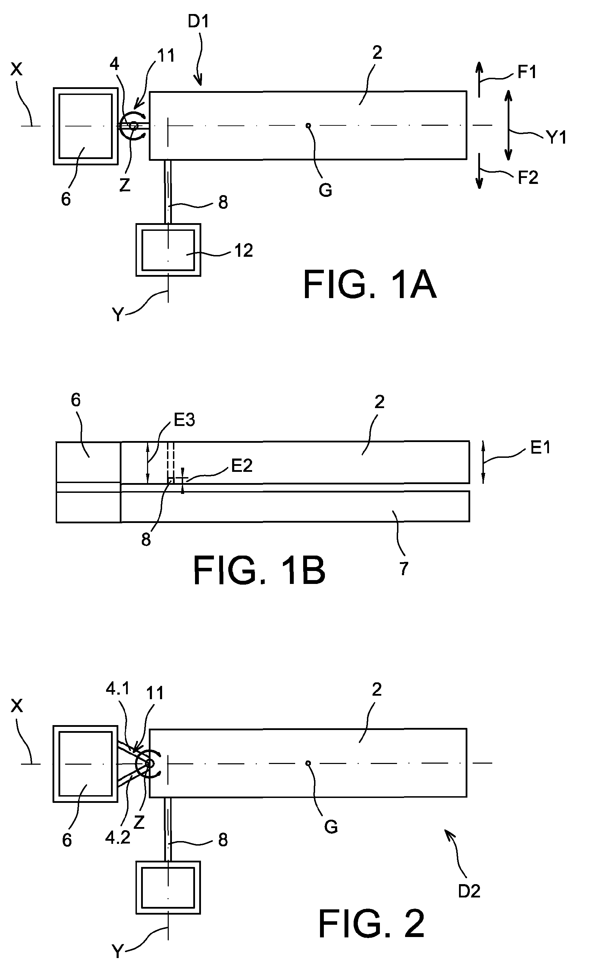

Sur les figures 1A et 1B, on peut voir un premier exemple de réalisation d'un dispositif selon la présente invention.

Le dispositif de détection à jauge piézorésistive D1 comporte une masse sismique 2 destinée à être déplacée sous l'effet d'un effort extérieur, par exemple sous l'effet d'une accélération dans le cas d'un accéléromètre. On souhaite mesurer les accélérations parallèles à une direction Y1.

La masse sismique 2 est suspendue au-dessus d'un substrat 7 au moyen d'une poutre 4 reliée à un plot 6, formant encastrement, solidaire du substrat 7. La poutre 4 maintient la masse sismique 2 sensiblement parallèle au substrat 7.

Le dispositif D1 comporte également une jauge de contrainte piézorésistive 8, de type poutre suspendue entre la masse sismique 2, d'axe Y et un deuxième plot 12 formant encastrement. L'axe Y de la jauge 8 s'étend dans la direction de la plus grande dimension de la jauge 8.

La poutre 4 présente un axe longitudinal X. La poutre 4 forme une charnière 11 ou liaison pivot d'axe Z perpendiculaire au plan du substrat, autour duquel la masse sismique va pivoter sous l'effet de l'accélération. Le plan du substrat sera désigné XY.

L'axe X et l'axe Z définissent un plan de symétrie de la poutre, perpendiculaire au plan du substrat, plus généralement des moyens de suspension et d'articulation de la masse sur le substrat. Le centre de gravité G de la masse sismique 2 est contenu dans ledit plan XZ. Le dispositif est orienté de sorte que le plan contenant l'axe Z et le centre de gravité G soit perpendiculaire à la direction Y1.

Selon la présente invention, la jauge 8 présente un axe Y parallèle à la direction Y1 et perpendiculaire au plan contenant l'axe Z de la liaison pivot 11 et le centre de gravité G.

Nous allons rappeler ci-dessous le fonctionnement d'une jauge de contrainte piézorésistive. Lorsque la jauge est déformée le long de son axe, et que sa longueur varie, sa résistance électrique varie également, c'est en mesurant cette variation de résistance que l'on peut en déduire le déplacement de la masse sismique et déterminer l'accélération extérieure. La variation de la résistance électrique est mesurée en faisant circuler un courant électrique dans la jauge 8.

Par conséquent, du fait de l'orientation de la jauge 8 selon la présente invention, le dispositif D1 est peu sensible aux déplacements transverses, i.e. aux déplacements selon une direction orthogonale à la direction Y1, car ceux-ci appliquent à la jauge 8, un effort en flexion, auquel la jauge 8 est peu sensible.

De plus, le dispositif est également peu sensible à la température, car en cas de dilatation de la poutre, celle-ci applique également un effort de flexion à la jauge 8, auquel elle n'est pas sensible.

En outre, comme on peut le voir sur la vue en coupe de la figure 1B, la masse sismique 2 présente une épaisseur E1, supérieure à l'épaisseur E2 de la jauge 8. Par exemple E1 est comprise entre quelques $\mu$m et quelques dizaines de $\mu$m, par exemple 50 $\mu$m et E2 est comprise entre 0,1 $\mu$m et 0,5 $\mu$m.

La poutre 4 formant charnière présente une épaisseur E3, dans l'exemple représenté, celle-ci est égale à E1, cependant elle pourrait être égale à E2 ou comprise entre E2 et E1.

La réduction de l'épaisseur de la jauge 8, et donc de sa section, permet de concentrer les contraintes qu'elle subit du fait du déplacement de la masse sismique 2, dans une section réduite, ce qui a pour effet d'augmenter la sensibilité du dispositif de détection D1.

Du fait du procédé de réalisation, la face de la jauge 8 en regard du substrat 7 se situe dans le même plan que la face de la masse sismique 2 en regard du substrat 7.

Des moyens (non représentés) pour appliquer une tension constante à la jauge, et pour mesure une variation de courant circulant dans la jauge et de traitement des mesures de variation de courant sont associées au dispositif D1.

Dans l'exemple représenté, le courant circule entre le plot 12 d'encastrement de la jauge et le plot 6 d'encastrement de la poutre 4, via la jauge 8 et la charnière.

Dans une variante, on peut prévoir d'utiliser une jauge formée de deux brins connectés électriquement en série, le courant mesuré circulant dans un sens dans le premier brin du contact en direction de la masse, puis dans le deuxième brin à partir de la masse vers le plot 12.

La configuration selon la présente invention présente l'avantage d'offrir un effet de levier, le rôle du levier étant joué par l'axe reliant l'axe de pivot Z et le centre de gravité G, celui-ci pivotant autour de l'axe de pivot Z. L'effort appliqué au centre de gravité G est amplifié par l'effet levier au niveau de l'ancrage de la jauge 8 sur la masse sismique 2. Par conséquent, même une faible accélération peut être détectée.

Nous allons maintenant expliquer le fonctionnement de ce dispositif de détection.

Le dispositif D1 est disposé au sein d'un environnement dont on veut mesurer l'accélération, par exemple est fixé à un objet dont on souhaite mesurer l'accélération. L'orientation de la jauge 8 est telle que l'axe Y de la jauge piézorésistive 8 est parallèle à la direction de l'accélération à mesurer.

Lorsque l'environnement connaît une telle accélération, la masse sismique 2 est mise en mouvement autour de l'axe Z, dans le sens de la flèche F1 ou dans le sens de la flèche F2. Ce déplacement de la masse sismique 2 applique des contraintes sur la jauge piézorésistive 8, soit des contraintes de traction si le déplacement est dans le sens F1, soit des contraintes de compression si le déplacement est dans le sens F2.

Ces contraintes appliquées à la jauge 8 provoquent une variation de la résistance électrique de la jauge, qui est alors mesurée via la variation du courant circulant dans la jauge. Cette variation de résistance permet de déterminer l'amplitude du déplacement de la masse sismique 2 et d'en déduire la valeur de l'accélération appliquée à l'environnement.

Sur la figure 2, on peut voir une variante du dispositif des figures 1A et 1B, dans laquelle la charnière ou liaison pivot n'est plus réalisée par une seule poutre 4 flexible dans le plan mais par deux poutres 4.1 et 4.2 flexibles dans le plan, fixées par une extrémité sur le plot 6 en deux point distincts et par une autre extrémité sur la masse sismique 2 en un point commun et définissant l'axe de pivot Z au niveau du point commun de fixation à la masse sismique 2. Cette configuration a pour effet avantageux d'obtenir une rotation pure ou quasiment pure de la masse sismique 2 autour de l'axe Z.

Le fonctionnement du dispositif D2 est identique à celui du dispositif D1.

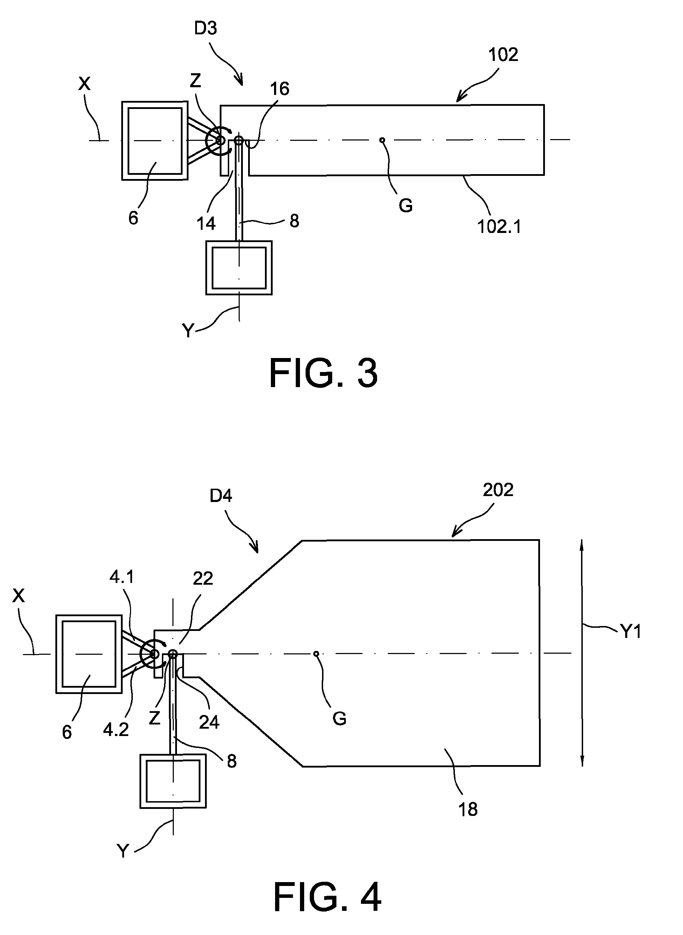

Sur la figure 3, on peut voir un deuxième mode de réalisation d'un dispositif de détection D3 selon la présente invention particulièrement avantageux.

Dans ce mode de réalisation, l'extrémité de la jauge de contrainte 8 solidaire de la masse sismique 102 est raccordée à celle-ci sur l'axe X passant par l'axe de pivot Z et le centre de gravité G de la masse sismique 102.

Cette configuration présente l'avantage que toute ou presque tout l'intensité de contrainte appliquée par le déplacement de la masse sismique 102 participe à la déformation selon l'axe Y de la jauge de contrainte 8. En effet, lorsque l'ancrage de la jauge 8 est décalée par rapport à l'axe passant par la liaison pivot et le centre de gravité G, comme c'est le cas dans le premier mode de réalisation, une partie de la contrainte de déformation exerce sur la jauge un effort de flexion combiné à un effort de compression ou de traction, cet effort de flexion ne participant pas ou très peu à la variation de la résistance électrique de la jauge piézorésistive 8.

Dans l'exemple représenté sur la figure 3, la masse sismique 102 comporte un évidement 14 dans sa face latérale 102.1 du côté de la jauge 8, cet évidement comportant un fond 16 aligné avec l'axe X, permettant ainsi à la jauge 8 de se raccorder à la masse sismique 102 au niveau du fond 16 de l'évidement 14. La liaison pivot d'axe Z est réalisée, comme pour le dispositif D2, par deux poutres inclinées l'une vers l'autre.

Une masse sismique comportant un tel évidement mais dont le fond n'est pas aligné avec l'axe X ne sort pas du cadre de la présente invention, il permet de rapprocher la liaison entre la jauge et la masse de l'axe X.

Sur la figure 4, on peut voir un deuxième exemple de dispositif de détection D4 selon le deuxième mode de réalisation, dans lequel la forme de la masse sismique 202 est modifiée.

La masse sismique 202 comporte, dans cet exemple, une première partie 18 parallélépipédique de plus grande largeur, une deuxième partie 20 trapézoïdale dont la grande base est commune à un côté de la première partie et une troisième partie 22 raccordée d'une part au moyen formant pivot et d'autre part à la jauge de contrainte 8. La masse mobile 202 présente sensiblement une symétrie par rapport à l'axe X.

La troisième partie 22 est également de forme parallélépipédique, elle présente une plus petite largeur confondue avec la petite base de la deuxième partie, comportant un évidement 24 pour permettre le raccordement de la jauge à la masse sismique en un lieu situé sur l'axe X ou au plus près de celui-ci. La profondeur de l'évidement 24 est réduite par rapport à celle de l'évidement 14 du dispositif D3 de la figure 3.

La masse sismique 202 est généralement monolithique, la division en trois parties a pour but de simplifier la description, et n'est pas nécessairement représentative de la réalisation industrielle.

Cette forme effilée de la masse sismique 202 au niveau de la liaison entre la masse sismique 202 et la jauge 8 permet de mettre en oeuvre une jauge piézorésistive 8 courte. En effet, en dégageant la zone de liaison de la jauge 8 sur la masse sismique, il est possible de rapprocher le plot d'ancrage 12 de cette zone et donc de mettre en oeuvre une jauge plus courte. Le fait de mettre en oeuvre une jauge courte permet d'avoir une jauge de résistance électrique réduite et donc de diminuer le bruit de mesure.

La liaison pivot d'axe Z est réalisée, comme pour le dispositif D2, par deux poutres inclinées l'une vers l'autre.

Il est à noter que la troisième partie 22 à laquelle se raccorde la jauge est réalisée de telle sorte qu'elle présente une rigidité supérieure à celle de la liaison pivot Z afin que la masse sismique 202 pivote autour de l'axe Z et non autour d'un axe perpendiculaire au substrat et situé au niveau de la troisième partie 22.

Dans les exemples décrits précédemment, la ou les poutre(s) formant charnière présentent une épaisseur égale à celle de la masse sismique, ceci présente comme avantage d'offrir un dispositif peu sensible aux accélérations transverse et de réalisation simplifiée, puisque la charnière est réalisée simultanément à la masse.

Sur la figure 5, on peut voir une vue en coupe d'un dispositif D5 très proche de D4, cependant dans ce cas l'épaisseur E3 des poutres formant la liaison pivot est inférieure à l'épaisseur E1 de la masse sismique 202 et supérieure à celle de la jauge 8.

Cet amincissement de la charnière permet d'augmenter encore la sensibilité du dispositif.

Dans un exemple particulièrement avantageux représenté sur la figure 5', la charnière présente une épaisseur E3 réduite et est située dans un plan parallèle au plan du substrat et contenant le centre de gravité G de la masse sismique 202. Cette disposition permet de rendre de réduire encore la sensibilité aux accélérations transverses. E3 peut être inférieure à l'épaisseur E2 de la jauge 8.

Sur la figure 6, on peut voir un autre exemple de réalisation d'un dispositif de détection D6 selon le deuxième mode de réalisation, comportant deux jauges piézorésistives 308, 308' montées en différentiel. La masse sismique 202 présente dans cet exemple une forme effilée, mais cela n'est en aucun cas limitatif.

Les jauges sont disposées symétriquement par rapport à l'axe X. La masse sismique 202 comporte une troisième partie 322 munie de deux évidements 324, 324' symétrique par rapport à l'axe, de sorte que les deux jauges 308, 308' soient reliées à la masse sismique 202 au plus près de l'axe X. Les axes des deux jauges 308, 308' sont orthogonaux au plan contenant l'axe de rotation Z et le centre de gravité G.

Les dimensions de la troisième partie 32 sont choisies de sorte que sa rigidité soit supérieure à celle de la liaison pivot autour de l'axe Z.

Ce montage différentiel permet de s'affranchir de l'effet des variations de température.

Sur la figure 7, on peut voir un autre exemple de réalisation d'un dispositif de détection D7 comportant des jauges piézorésistives 408, 408' montées en différentiel associées à un montage en pont de Wheatstone, plus précisément en demi-pont de Wheatstone.

La résistance de la jauge 408' est désignée R + dR et la résistance de la jauge 408 est désignée R-dR. En effet les résistances des deux jauges 408, 408' varient en sens contraire.

On applique une tension $V_e$ et on mesure une tension $V_s$ entre le point A et le point B qui est situé ici sur plot 6 d'ancrage des poutres formant la liaison pivot autour de l'axe Z, qui est au même potentiel que le point de connexion des deux jauges 408, 408'.

Les autres résistances ont une valeur R.

En appliquant le théorème de Milman, on obtient

$$V_{\text{sortie}} = \frac{V_{\text{entrée}}}{2} \frac{dR}{R}$$

On en déduit

$$dR = 2R \frac{V_{sortie}}{V_{entrée}}$$

A partir de cette mesure de variation de résistance due au déplacement de la masse sismique 202, on peut en déduire l'accélération subie par le dispositif.

On peut également réaliser un montage en pont de Wheatstone, dans ce cas, on utilise de préférence deux masses mobiles associées chacune à deux jauges piézoélectriques montées en différentiel.

Ce montage permet d'augmenter encore la sensibilité du dispositif de détection selon la présente invention.

Dans les exemples représentés, la masse est pleine, cependant on peut prévoir que celle-ci soit ajourée. D'ailleurs, suivant les procédés de réalisation, la réalisation de lumières intervient pour libérer la masse.

Grâce à la présente invention, en réduisant la section de la ou des jauges piézorésistives, un gain significatif sur la sensibilité du dispositif à détection piézorésistive peut être obtenu.

Par ailleurs, le fait de réaliser la masse sismique et la jauge piézorésistive suivant des épaisseurs différentes, permet de les découpler, et ainsi de les optimiser séparément.

De plus, en positionnant la poutre de suspension de la masse sismique et la jauge piézorésistive à angle droit, la sensibilité transverse de l'accéléromètre est fortement limitée.

Par ailleurs, on bénéficie d'une amplification de la contrainte appliquée à la jauge par un effet levier.

En outre, en prévoyant la zone de liaison de la jauge piézorésistive sur ou au plus près de l'axe reliant l'axe de pivot et le centre de gravité, la contrainte due au déplacement est toute ou presque toute axiale.

Avantageusement, la distance entre la zone de liaison et l'axe reliant l'axe de piot et le centre de gravité est de l'ordre du µm. A titre d'exemple, dans le cas d'une masse de longueur 300 µm, de largeur 200 µm et d'épaisseur de 15 µm, et une jauge de longueur de 4 µm, d'épaisseur de 0,15 µm et de largeur de 0,25 µm, cette distance est de l'ordre de 2 µm

Nous allons maintenant décrire plusieurs exemples de réalisation de procédés de réalisation d'un dispositif à détection piézorésistive selon la présente invention.

Sur les figures 8A à 8G, on peut voir les différentes étapes d'un premier exemple d'un procédé de réalisation du dispositif selon la présente invention.

On part d'un substrat SOI (silicium on insulator) comportant par exemple une couche de silicium 26, une couche d'oxyde de silicium (buried oxide) 28 d'épaisseur 1 $\mu$m, et une couche de silicium 30, par exemple d'épaisseur 0,3 sur la couche 28. La couche 28 forme la couche sacrificielle. On pourrait également réaliser l'empilement en reportant la couche 30 de Si sur l'empilement des couches 26 et 28, ou effectuer un dépôt de cette couche 30 sur la couche 28. De préférence, la couche 30 est en silicium monocristallin.

Il est ensuite procédé à une photolithographie, puis à une gravure de la couche 30 de silicium pour définir la jauge piézorésistive 8 et définir la zone de contact avec le substrat. La gravure est arrêtée sur la couche de SiO$_2$ (figure 8A).

Lors d'une étape suivante représentée sur la figure 8B, on procède au dépôt d'une couche de SiO$_2$ 32, par exemple d'épaisseur 0,3 $\mu$m, destinée à former une couche d'arrêt.

Ensuite, est réalisée une photolithographie destinée à délimiter une portion 32.1 de la couche 32 recouvrant la jauge piézorésistive. Une gravure de la couche 32 est ensuite réalisée, supprimant celle-ci sauf au niveau de la portion 32.1. Le SiO$_2$ dans la zone de contact avec le substrat est également gravé. Un décapage peut être effectué pour supprimer les résidus de gravure et du masque.

Lors d'une étape suivante représentée sur la figure 8C, on effectue un dépôt d'une couche de Si 34 par croissance épitaxiale sur la couche 30 de Si et sur la portion 32.1 de SiO$_2$. Cette couche a par exemple une épaisseur de 20 $\mu$m, et comporte une partie 34.1 formée de silicium monocristallin et une partie 34.2 formée de silicium polycristallin au dessus de la portion 34.1 de SiO$_2$. Un polissage mécano-chimique de la surface libre de la couche 34 peut être effectué afin de supprimer le défaut de planéité introduit par la portion 32.1.

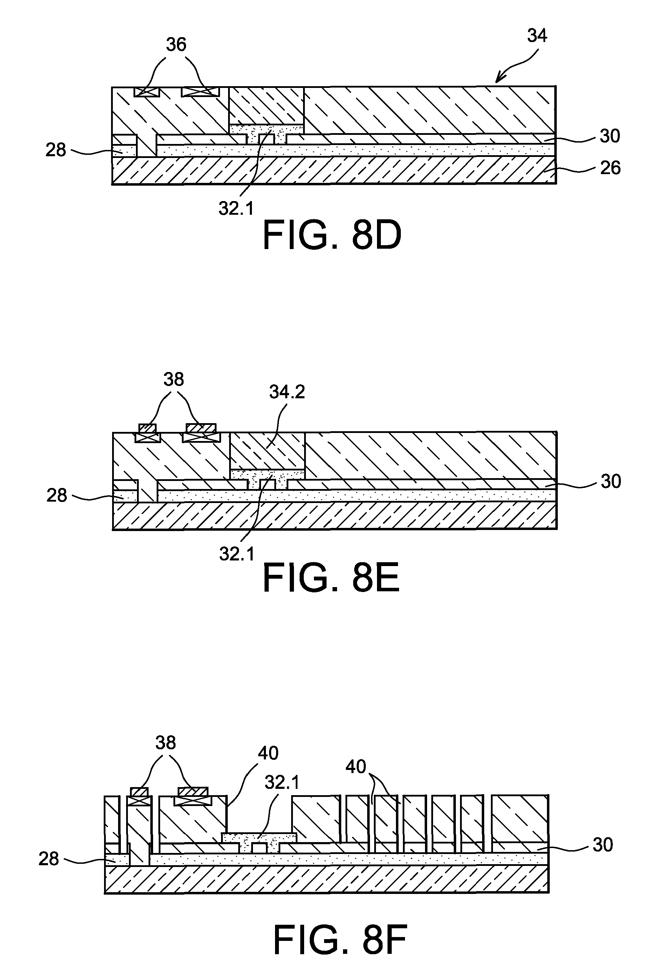

Lors d'une étape suivante représentée sur la figure 8D, on effectue une photolithographie pour définir l'emplacement des plots 36 de contact. Ensuite est effectuée, un retrait des parties du masque au niveau de ces emplacements et une implantation au niveau de ces plots 36. Une étape de recuit est ensuite réalisée.

Lors d'une étape suivante représentée sur la figure 8E, on effectue un dépôt d'une couche métallique dans laquelle seront réalisés les contacts électriques 38. Puis une photolithographie est réalisée sur cette couche protégeant la couche métallique au-dessus des plots 36. La couche métallique est ensuite gravée laissant seulement les contacts 38. Un décapage peut être effectué pour supprimer les résidus de gravure et du masque.

Lors d'une étape suivante représentée sur la figure 8F, on effectue une photolithographie destinée à permettre une gravure sélective de la couche 34, notamment pour supprimer la portion 34.1 au-dessus de la jauge piézorésistive et pour définir la masse, les plots d'ancrage et les contacts avec la couche 26. On effectue ensuite des gravures verticales 40 dans l'épaisseur de la couche 34 jusqu'à la couche d'oxyde 28 et la portion d'oxyde 32.1 par exemple par DRIE (Deep Reactive Ion Etching).

On effectue ensuite un décapage pour supprimer les résidus de gravure.

Lors d'une étape suivante représentée sur la figure 8G, on libère la masse sismique 2 et la charnière, en retirant la couche d'oxyde 28 et la jauge piézorésistive 8 en retirant la portion 32.1, par exemple au moyen d'acide sulfurique liquide et/ou vapeur. Il s'agit d'une gravure au temps. L'acide sulfurique est laissé au contact de la couche d'oxyde 28 et de l'oxyde le temps nécessaire pour libérer la masse sismique tout en laissant de la couche sacrificielle sous les parties fixes du système.

Sur les figures 9A à 9G, on peut voir un autre exemple d'un procédé de réalisation d'un dispositif à détection piézorésistive selon la présente invention.

On part d'un substrat SOI (silicium on insulator) comportant par exemple une couche de silicium 126, une couche d'oxyde de silicium (buried oxide) 128 d'épaisseur 1 $\mu$m, et une couche de silicium 130, par exemple d'épaisseur 0,15 $\mu$m sur la couche 128. Avantageusement la couche 130 est en Si monocristallin.

Il est ensuite procédé à une photolithographie puis une gravure de la couche 130 de silicium pour définir la jauge piézorésistive 8 et définir la zone de contact avec le substrat. La gravure est arrêtée sur la couche de SiO$_2$ (figure 9A).

Lors d'une étape suivante représentée sur la figure 9B, on procède au dépôt d'une couche de SiO$_2$ 132, par exemple d'épaisseur 0,3 $\mu$m destinée à former une couche d'arrêt.

Ensuite, est réalisée une photolithographie destinée à délimiter une portion 132.1 de la couche 132 recouvrant la jauge piézorésistive. Une gravure de la couche 132 est ensuite réalisée, supprimant celle-ci sauf au niveau de la portion 132.1. Le SiO$_2$ dans la zone de contact avec le substrat est également gravé. Un décapage peut être effectué pour supprimer les résidus de gravure et du masque.

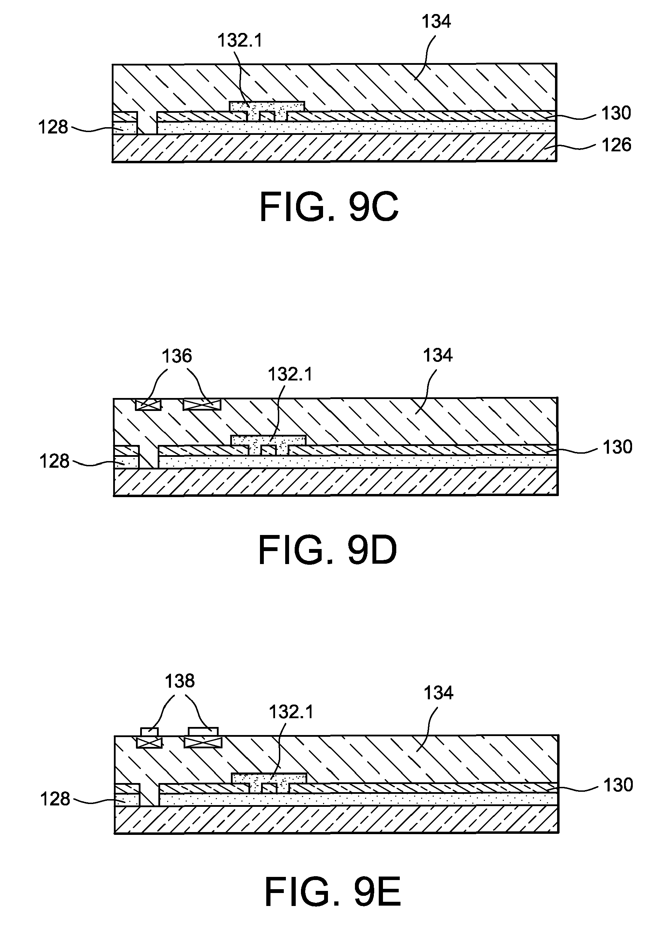

Lors d'une étape suivante représentée sur la figure 9C, on effectue un dépôt d'une couche de Si 134 polycristallin sur la couche 130 de Si et sur la portion 132.1 de SiO$_2$. Cette couche a par exemple une épaisseur de 15 $\mu$m. Un polissage mécano-chimique de la surface libre de la couche 134 peut être effectué afin de supprimer le défaut de planéité introduit par la portion 132.1. La couche 134 peut également être un matériau conducteur ou isolant. En effet, il n'a pas nécessaire que la couche 134 soit dans le même matériau que celui de la couche 130, puisqu'elle sert à définir la masse et la charnière, et non la jauge. Dans le cas d'un matériau isolant, une étape supplémentaire pour récupérer le contact électrique sur la couche de silicium 126 est à prévoir.

Lors d'une étape suivante représentée sur la figure 9D, on effectue une photolithographie pour définir l'emplacement des plots 136 de contact. Ensuite est effectué un retrait des parties du masque au niveau de ces emplacements et une implantation au niveau de ces plots 36. Une étape de recuit est ensuite réalisée.

Lors d'une étape suivante représentée sur la figure 9E, on effectue un dépôt d'une couche métallique dans laquelle seront réalisés les contacts électriques 138. Puis une photolithographie est réalisée sur cette couche protégeant la couche métallique au-dessus des plots 136. La couche métallique est ensuite gravée laissant seulement les contacts 138. Un décapage peut être effectué pour supprimer les résidus de gravure et du masque.

Lors d'une étape suivante représentée sur la figure 9F, on effectue une photolithographie destinée à permettre une gravure sélective de la couche 134, notamment pour supprimer la portion au-dessus de la jauge piézorésistive et pour définir la masse, les plots d'ancrage et les contacts avec la couche 126. On effectue ensuite des gravures verticales 140 dans l'épaisseur de la couche 134 jusqu'à la couche d'oxyde 128 et la portion d'oxyde 132.1 par exemple par DRIE (Deep Reactive Ion Etching).

On effectue ensuite un décapage pour supprimer les résidus de gravure.

Lors d'une étape suivante représentée sur la figure 9G, on libère la masse sismique 2 et la charnière, en retirant la couche d'oxyde 128 et la jauge piézorésistive 8 en retirant la portion 132.1, par exemple au moyen d'acide sulfurique liquide et/ou vapeur. Il s'agit d'une gravure au temps. L'acide sulfurique est laissé au contact de la couche d'oxyde 128 et de l'oxyde le temps nécessaire pour libérer la masse sismique tout en laissant de la couche sacrificielle sous les parties fixes du système.

Avec les exemples de procédé décrits ci-dessus, on obtient une ou des poutres définissant la liaison pivot dont l'épaisseur est égale à celle de la masse sismique. Sur les figures 10A à 10G, est schématisé un autre exemple d'un procédé de réalisation d'un dispositif à détection piézorésistive selon la présente invention, permettant de réaliser une ou des poutres formant la liaison pivot dont l'épaisseur est inférieure à elle de la masse sismique et supérieure à celle de la jauge piézorésistive, comme dans le dispositif de la figure 5. Les étapes 10A à 10E sont similaires aux étapes 9A à 9E, la description des étapes 9A à 9E ci-dessus s'applique et ne sera pas reproduite.

A l'étape 10F, on effectue une photolithographie destinée à permettre le retrait partielle de la couche 134 de silicium polycristallin sur une profondeur p inférieure à l'épaisseur totale h de la couche 134 afin de définir la liaison pivot 11. Le retrait de cette portion de couche 134 est obtenu par exemple par DRIE (Deep Reactive Ion Etching) sur une profondeur d'environ 5 μm. Il s'agit par exemple d'une gravure au temps.

Lors d'une étape suivante représentée sur la figure 10G, on libère la masse sismique 2 et la charnière 11 en retirant la couche d'oxyde 128, et la jauge piézorésistive 8 en retirant la portion 132.1, par exemple au moyen d'acide sulfurique liquide et/ou vapeur. Il s'agit d'une gravure au temps. L'acide sulfurique est laissé au contact de la couche d'oxyde 128 et de l'oxyde le temps nécessaire pour libérer la masse sismique tout en laissant de la couche sacrificielle sous les parties fixes du système.

Sur la figure 11, on peut voir un autre exemple particulièrement avantageux d'un dispositif de détection selon la présente invention.

Dans cet exemple de réalisation, la jauge de contrainte 8 est relié au plot d'ancrage 12 par un bras suspendu 42 lui-même ancré sur le plot d'ancrage 12. Le plot d'ancrage 12 est situé proche du plot d'ancrage 6 de la masse sismique 2.

Le bras suspendu 42 offre une rigidité importante dans la direction de l'accélération à mesurer, i.e. dans la direction de l'axe Y.

Cette disposition rapprochée du plot d'ancrage 12 de la jauge 8 et du plot d'ancrage 6 de la masse sismique 2 permet de limiter les dilatations différentielles entre le deux ancrages 6, 12 et donc de limiter la dérive de l'accéléromètre en fonction des contraintes mécaniques extérieures et de la température.

Le bras suspendu 42 est réalisé simultanément à la masse sismique 2. Les trous visibles sur la figure 11 sont destinés à permettre la libération de la masse sismique et du bras suspendu comme pour les autres exemples de réalisation.

## Revendications

1. Dispositif de détection MEMS ou NEMS dans le plan destiné à mesurer des déplacements orientés selon une direction (Y1) comportant une masse sismique (2, 102, 202) suspendue par rapport à un substrat (7), des moyens de suspension et d'articulation de la masse sismique (2, 102, 202) par rapport au substrat de sorte que ladite masse sismique (2, 102, 202) est apte à pivoter autour d'un axe (Z) perpendiculaire au plan (XY) du substrat (7), au moins une jauge de contrainte piézorésistive (8, 308, 308', 408, 408') suspendue entre la masse sismique et le substrat (7), et d'une part reliée directement mécaniquement et électriquement à la masse sismique et d'autre part reliée mécaniquement et électriquement à un plot d'encastrement (12) ancré au substrat, les moyens de suspension et d'articulation de la masse sismique (2, 102, 202) comportant une poutre ou plusieurs poutres, ladite poutre ou lesdites poutres étant reliée(s) au substrat en une zone ou des zones distincte(s) de celle par laquelle la jauge suspendue est reliée au substrat, dans lequel ladite jauge piézorésistives (8, 308, 308', 408, 408') présente une épaisseur ($E_2$) inférieure à celle ($E_1$) de la masse sismique (2, 102, 202), et dans lequel l'axe (Y) de la jauge de contrainte piézorésistive (8, 308, 308', 408, 408') est orthogonal au plan (XZ) contenant l'axe du pivot (Z) et le centre de gravité (G) de la masse sismique (2, 102, 202) et ledit plan (XZ) étant orthogonal à la direction (Y1) des déplacements à mesurer.

2. Dispositif de détection MEMS ou NEMS dans le plan selon la revendication 1, dans lequel la liaison mécanique entre la jauge piézorésistive (8, 308, 308', 408, 408') et la masse sismique (102, 202) se situe sur ou au plus près du plan (XZ) contenant le centre de gravité (G) et l'axe du pivot (Z).

3. Dispositif de détection MEMS ou NEMS dans le plan selon la revendication 2, dans lequel la masse sismique (102, 202) comporte un évidement recevant l'extrémité de la jauge (8, 308, 308', 408, 408') destinée à être connectée à la masse sismique (102, 202), ladite extrémité de la jauge piézorésistive (8, 308, 308', 408, 408') étant connectée au fond de l'évidement, le fond de l'évidement se situant dans le plan contenant le centre de gravité (G) et l'axe du pivot (Z) ou au plus près.

4. Dispositif de détection MEMS ou NEMS dans le plan selon l'une des revendications 1 à 3, dans lequel la masse sismique (202) comporte une zone effilée dans le plan au niveau de sa connexion avec la jauge piézorésistive (8, 308, 308', 408, 408').

5. Dispositif de détection MEMS ou NEMS dans le plan selon l'une des revendications 1 à 4, dans lequel l'épaisseur ($E_1$) de la masse sismique (2, 102, 202) est de l'ordre de quelques dizaines $\mu$m et l'épaisseur ($E_2$) de la jauge piézorésistive (8, 308, 308', 408, 408') est de l'ordre de quelques $\mu$m.

6. Dispositif de détection MEMS ou NEMS dans le plan selon l'une des revendications 1 à 5, dans lequel le plan (XZ) a contenant l'axe du pivot (Z) et le centre de gravité (G) forme un plan de symétrie pour des moyens de suspension de la masse sismique.

7. Dispositif de détection MEMS ou NEMS dans le plan selon l'une des revendications 1 à 6, dans lequel les moyens maintenant la masse sismique (2, 102, 202) suspendue et portant l'axe de rotation de la masse comportent au moins une poutre présentant une épaisseur ($E_3$) supérieure ou égale à celle ($E_2$) de la jauge piézorésistive et inférieure à celle ($E_1$) de la masse sismique.

8. Dispositif de détection MEMS ou NEMS dans le plan selon l'une des revendications 1 à 7, dans lequel la au moins une poutre des moyens maintenant la masse sismique suspendue et portant l'axe de rotation de la masse est disposée sensiblement dans le plan contenant le centre de gravité, parallèle au plan (XY) du substrat (7).

9. Dispositif de détection MEMS ou NEMS dans le plan selon l'une des revendications 1 à 8 en combinaison avec la revendication 6, dans lequel les moyens maintenant la masse sismique (2, 102, 202) suspendue et portant l'axe de rotation de la masse comportent au moins une poutre présentant une épaisseur ($E_3$) égale à l'épaisseur ($E_1$) de la masse sismique (2).

10. Dispositif de détection MEMS ou NEMS dans le plan selon l'une revendication 1 à 9, dans lequel lesdits moyens comportent deux poutres sensiblement de même longueur ancrées sur le substrat (7) en deux points distincts et ancrées sur la masse sismique (102, 202) en un point par lequel passe l'axe de pivot (Z).

11. Dispositif de détection MEMS ou NEMS dans le plan selon l'une des revendications 1 à 10, comportant deux jauges piézorésistives (308, 308', 408, 408') montées en différentiel symétriquement par rapport audit plan, lesdites jauges étant avantageusement associées à un montage en demi-pont de Wheatstone.

12. Dispositif de détection MEMS ou NEMS selon l'une des revendications 1 à 11, dans lequel le courant circule entre le plot d'encastrement (12) d'au moins une jauge piézorésistive (8) et un plot d'encastrement (6) de la poutre, via la jauge piézorésistive (8) et une articulation (11) de la masse sismique par rapport au substrat autour de l'axe (Z).

13. Procédé de réalisation d'un dispositif de détection MEMS ou NEMS dans le plan selon l'une des revendications précédentes, ce procédé comportant, sur un substrat :

   - la formation d'une première zone mince, présentant une première épaisseur (E2) formant au moins une jauge piézoélectrique.
   - la formation d'une deuxième zone épaisse, présentant une deuxième épaisseur (E1) supérieure à la première épaisseur (E2), formant au moins une masse sismique,
   - la formation d'une troisième zone, dite zone charnière destinée à former les moyens de suspension et d'articulation de la masse sismique par rapport au substrat, d'épaisseur comprise entre celle de la première zone et celle de la deuxième zone, de sorte que lesdits moyens de suspension et d'articulation comportent une poutre ou plusieurs poutres reliées au substrat en une zone distincte ou en des zones distinctes de celle par laquelle la jauge piézoélectrique est reliée au substrat.

14. Procédé selon la revendication 13, la première zone mince étant réalisée par la formation d'une portion d'une deuxième couche sacrificielle au sein d'une couche (22) de matériau semiconducteur, et de gravure de cette portion et d'une première couche sacrificielle.

15. Procédé selon la revendication 14, dans lequel la formation d'une portion d'une deuxième couche sacrificielle au sein d'une couche (22) de matériau semi-conducteur comporte :

- la gravure d'une première couche de matériau semi-conducteur située sur la première couche sacrificielle,
- le dépôt et la gravure de la deuxième couche sacrificielle pour définir ladite portion,
- la réalisation d'une deuxième couche de matériau semi-conducteur, conducteur ou insolant.

16. Procédé selon la revendication 15, dans lequel la réalisation de la deuxième couche de matériau semi-conducteur sur ladite portion est obtenue par croissance épitaxiale d'un matériau semi-conducteur.

17. Procédé selon l'une des revendications 13 à 16, la première zone et la troisième zone étant obtenues par étapes de gravure indépendantes l'une de l'autre.

18. Procédé selon la revendication 17, dans lequel la gravure de la troisième zone est effectuée avant la gravure des première et deuxième zones, par exemple par DRIE.

**Patentansprüche**

1. MEMS- bzw. NEMS Vorrichtung zur Detektion im Ebene, die dazu bestimmt ist, in einer Richtung (Y1) erfolgende Bewegungen zu messen, enthaltend eine seismische Masse (2, 102, 202), die bezüglich eines Substrats (7) aufgehängt ist, Mittel zum Aufhängen und Anlenken der seismischen Masse (2, 102, 202) bezüglich des Substrats, so dass die seismische Masse (2, 102, 202) dazu geeignet ist, um eine Achse (Z) senkrecht zur Ebene (XY) des Substrats (7) zu schwenken, zumindest einen piezoresistiven Dehnungsmessstreifen (8, 308, 308', 408, 408'), der zwischen der seismischen Masse und dem Substrat (7) aufgehängt ist und einerseits mechanisch und elektrisch unmittelbar mit der seismischen Masse und andererseits mechanisch und elektrisch mit einem Steckzapfen (12) verbunden ist, der mit dem Substrat verankert ist, wobei die Mittel zum Aufhängen und Anlenken der seismischen Masse (2, 102, 202) einen Balken oder mehrere Balken aufweisen, wobei der Balken bzw. die Balken mit dem Substrat in einem Bereich oder in Bereichen verbunden ist/sind, der bzw. die sich von demjenigen unterscheiden, über welchen der aufgehängte Dehnungsmessstreifen mit dem Substrat verbunden ist, wobei der piezoresistive Dehnungsmessstreifen (8, 308, 308', 408, 408') eine Dicke ($E_2$) aufweist, die geringer als die ($E_1$) der seismischen Masse (2, 102, 202) ist und wobei die Achse (Y) des piezoresistiven Dehnungsmessstreifens (8, 308, 308', 408, 408') orthogonal zur Ebene (XY) verläuft, welche die Schwenkachse (Z) und den Schwerpunkt (G) der seismischen Masse (2, 102, 202) enthält, und wobei die Ebene (XZ) orthogonal zur Richtung (Y1) der zu messenden Bewegungen verläuft.

2. MEMS- bzw. NEMS Vorrichtung zur Detektion im Ebene nach Anspruch 1, wobei die mechanische Verbindung zwischen dem piezoresistiven Dehnungsmessstreifen (8, 308, 308', 408, 408') und der seismischen Masse (102, 202) auf oder möglichst nahe an der Ebene (XZ) liegt, welche den Schwerpunkt (G) und die Schwenkachse (Z) enthält.

3. MEMS- bzw. NEMS Vorrichtung zur Detektion im Ebene nach Anspruch 2, wobei die seismische Masse (102, 202) eine Ausnehmung aufweist, welche das Ende des Dehnungsmessstreifens (8, 308, 308', 408, 408') aufnimmt, das mit der seismischen Masse (102, 202) verbunden werden soll, wobei das Ende des piezoresistiven Dehnungsmessstreifens (8, 308, 308', 408, 408') mit dem Boden der Ausnehmung verbunden ist, wobei der Boden der Ausnehmung in der Ebene, welche den Schwerpunkt (G) und die Schwenkachse (Z) enthält, oder möglichst nahe daran liegt.

4. MEMS- bzw. NEMS Vorrichtung zur Detektion im Ebene nach einem der Ansprüche 1 bis 3, wobei die seismische Masse (202) einen spitz zulaufenden Bereich in der Ebene in ihrem Verbindungsbereich mit dem piezoresistiven Dehnungsmessstreifen (8, 308, 308', 408, 408') aufweist.

5. MEMS- bzw. NEMS Vorrichtung zur Detektion im Ebene nach einem der Ansprüche 1 bis 4, wobei die Dicke ($E_1$) der seismischen Masse (2, 102, 202) in der Größenordnung von einigen Zehn $\mu$m ist und die Dicke ($E_2$) des piezoresistiven Dehnungsmessstreifens (8, 308, 308', 408, 408') in der Größenordnung von einigen $\mu$m ist.

6. MEMS- bzw. NEMS Vorrichtung zur Detektion im Ebene nach einem der Ansprüche 1 bis 5, wobei die Ebene (XZ), welche die Schwenkachse (Z) und den Schwerpunkt (G) enthält, eine Symmetrieebene für die Mittel zum Aufhängen der seismischen Masse bildet.

7. MEMS- bzw. NEMS Vorrichtung zur Detektion im Ebene nach einem der Ansprüche 1 bis 6, wobei die Mittel, welche die seismische Masse (2, 102, 202) aufgehängt halten und die Drehachse der Masse tragen, zumindest einen Balken enthalten, der eine Dicke ($E_3$) größer oder gleich derjenigen ($E_2$) des piezoresistiven Dehnungsmessstreifens und geringer als derjenigen ($E_1$) der seismischen Masse aufweist.

**8.** MEMS- bzw. NEMS Vorrichtung zur Detektion im Ebene nach einem der Ansprüche 1 bis 7, wobei der zumindest eine Balken der Mittel, welche die seismische Masse aufgehängt halten und die Drehachse der Masse tragen, im Wesentlichen in der Ebene angeordnet ist, welche den Schwerpunkt enthält und parallel zur Ebene (XY) des Substrats (7) verläuft.

**9.** MEMS- bzw. NEMS Vorrichtung zur Detektion im Ebene nach einem der Ansprüche 1 bis 8 in Kombination mit Anspruch 6, wobei die Mittel, welche die seismische Masse (2, 102, 202) aufgehängt halten und die Drehachse der Masse tragen, zumindest einen Balken enthalten, der eine Dicke ($E_3$) gleich der Dicke ($E_1$) der seismischen Masse (2) aufweist.

**10.** MEMS- bzw. NEMS Vorrichtung zur Detektion im Ebene nach einem der Ansprüche 1 bis 9, wobei die Mittel zwei Balken im Wesentlichen gleicher Länge aufweisen, die an dem Substrat (7) in zwei verschiedenen Punkten verankert und an der seismischen Masse (102, 202) in einem Punkt verankert sind, durch den die Schwenkachse (Z) verläuft.

**11.** MEMS- bzw. NEMS Vorrichtung zur Detektion im Ebene nach einem der Ansprüche 1 bis 10, enthaltend zwei piezoresistive Dehnungsmessstreifen (308 308', 408, 408'), die symmetrisch bezüglich der Ebene differentiell geschaltet sind, wobei die Dehnungsmessstreifen vorteilhaft einer Schaltung mit Wheatstone-Halbbrücke zugeordnet sind.

**12.** MEMS- bzw. NEMS Vorrichtung zur Detektion im Ebene nach einem der Ansprüche 1 bis 11, wobei der Strom zwischen dem Steckzapfen (12) zumindest eines piezoresistiven Dehnungsmessstreifens (8) und einem Steckzapfen (6) des Balkens über den piezoresistiven Dehnungsmessstreifen (8) und einer Anlenkung (11) der seismischen Masse bezüglich des Substrats um die Achse (Z) fließt.

**13.** Verfahren zum Herstellen einer MEMS- bzw. NEMS Vorrichtung zur Detektion im Ebene nach einem der vorangehenden Ansprüche, wobei dieses Verfahren an einem Substrat umfasst:

　　- Ausbilden eines dünnen ersten Bereichs mit einer ersten Dicke ($E_2$), der zumindest ein piezoelektrischen Dehnungsmessstreifen bildet,
　　- Ausbilden eines dicken zweiten Bereichs mit einer zweiten Dicke ($E_1$), die größer als die erste Dicke ($E_2$) ist, der zumindest eine seismische Masse bildet,
　　- Ausbilden eines dritten Bereichs, Scharnierbereich genannt, der dazu bestimmt ist, die Mittel zum Aufhängen und Anlenken der seismischen Masse bezüglich des Substrats zu bilden, dessen Dicke zwischen der des ersten Bereichs und der des zweiten Bereichs liegt, so dass die Aufhängungs- und Anlenkungsmittel einen Balken oder mehrere Balken aufweisen, die mit dem Substrat in einem Bereich oder in Bereichen verbunden sind, der bzw. die sich von demjenigen unterscheiden, über welchen des piezoelektrische eines Dehnungsmessstreifen mit dem Substrat verbunden ist.

**14.** Verfahren nach Anspruch 13, wobei der dünne erste Bereich durch Ausbilden eines Abschnitts einer zweiten Opferschicht innerhalb einer Halbleitermaterialschicht (22) und durch Ätzen dieses Abschnitts und einer ersten Opferschicht ausgebildet ist.

**15.** Verfahren nach Anspruch 14, wobei das Ausbilden eines Abschnitts einer zweiten Opferschicht innerhalb einer Halbleitermaterialschicht (22) umfasst:

　　- Ätzen einer ersten Halbleitermaterialschicht, die sich an der ersten Opferschicht befindet,
　　- Abscheiden und Ätzen der zweiten Opferschicht, um den Abschnitt zu definieren,
　　- Ausbilden einer zweiten Schicht aus Halbleiter-, Leiter- oder Isoliermaterial.

**16.** Verfahren nach Anspruch 15, wobei das Ausbilden der zweiten Schicht aus Halbleitermaterial an dem Abschnitt durch epitaxiales Wachsen eines Halbleitermaterials erhalten wird.

**17.** Verfahren nach einem der Ansprüche 13 bis 16, wobei der erste Bereich und der dritte Bereich durch voneinander unabhängige Ätzvorgänge erhalten werden.

**18.** Verfahren nach Anspruch 17, wobei das Ätzen des dritten Bereichs vor dem Ätzen des ersten und des zweiten Bereichs, beispielsweise durch DRIE, erfolgt.

**Claims**

**1.** An in-plane MEMS or NEMS detection device for measuring displacements directed along a direction (Y1) comprising a seismic mass (2, 102, 202) suspended with respect to a substrate (7), suspension and articulation means for suspending and articulating the seismic mass (2, 102, 202) with respect to the substrate such that said seismic mass (2, 102, 202) is pivotable about an axis (Z) perpendicular to the plane (XY) of the substrate (7), at least one piezoresistive strain gauge (8, 308, 308', 408, 408') suspended between the seismic mass and the substrate (7), and on the one hand mechanically and electrically directly connected to the seismic mass and on the other hand mechanically and electrically to an embedding pad (6) anchored to the substrate, the suspension and articulation means of the seismic mass (2, 102, 202) comprising one beam or several beams, said one beam or said several beams being connected to the substrate at an area or at areas distinct from that by which the suspended gauge is connected to the substrate, where said piezoresistive gauge (8, 308, 308', 408, 408') having a thickness ($E_2$) lower than that ($E_1$) of the seismic mass (2, 102, 202), and wherein the axis (Y) of the piezoresistive strain gauge (8, 308, 308', 408, 408') is orthogonal to the plane (XZ) containing the pivot axis (Z) and the centre of gravity (G) of the seismic mass (2, 102, 202) and said plane (XZ) being orthogonal to the direction (Y1) of the displacements to be measured.

2. The in-plane MEMS or NEMS detection device according to claim 1, wherein the mechanical connection between the piezoresistive gauge (8, 308, 308', 408, 408') and the seismic mass (2, 102, 202) is located on or as close as possible to the plane (XZ) containing the centre of gravity (G) and the pivot axis (Z).

3. The in-plane MEMS or NEMS detection device according to claim 2, wherein the seismic mass (2, 102, 202) comprises a recess receiving the end of the gauge (8, 308, 308', 408, 408') for being connected to the seismic mass (2, 102, 202), said end of the gauge (8, 308, 308', 408, 408') being connected to the bottom of the recess, the bottom of the recess being located in or as close as possible to the plane containing the centre of gravity (G) and the pivot axis (Z).

4. The in-plane MEMS or NEMS detection device according to one of claims 1 to 3, wherein the seismic mass (202) comprises an in-plane tapered area at its connection with the piezoresistive gauge (8, 308, 308', 408, 408').

5. The in-plane MEMS or NEMS detection device according to one of claims 1 to 4, wherein the thickness ($E_1$) of the seismic mass (2, 102, 202) is in the order of a few tens $\mu$m and the thickness ($E_2$) of the piezoresistive gauge (8, 308, 308', 408, 408') is in the order of a few $\mu$m.

6. The in-plane MEMS or NEMS detection according to one of claims 1 to 5, wherein the plane (XZ) containing the pivot axis (Z) and the centre of gravity (G) form a plane of symmetry for means for suspending the seismic mass.

7. The in-plane MEMS or NEMS detection device according to one of claims 1 to 4, wherein the means maintaining the seismic mass (2, 102, 202) suspended and carrying the rotational axis of the mass comprise at least one beam having a thickness ($E_3$) equal to or higher than that ($E_2$) of the piezoresistive gauge and lower than that ($E_1$) of the seismic mass.

8. The in-plane MEMS or NEMS detection device according to one of claims 1 to 7, wherein the at least one beam of the means maintaining the seismic mass suspended and carrying the rotational axis of the mass is substantially provided in the plane containing the centre of gravity, which is parallel to the plane (XY) of the substrate (7).

9. The in-plane MEMS or NEMS detection device according to one of claims 1 to 9 when combined with claim 6, wherein the means maintaining the seismic mass (2, 102, 202) suspended and carrying the rotational axis of the mass comprise at least one beam having a thickness ($E_3$) equal to the thickness ($E_1$) of the seismic mass (2).

10. The in-plane MEMS or NEMS detection device according to one of claims 1 to 9, wherein said means comprise two beams of substantially the same length anchored to the substrate (7) at two distinct points and anchored to the seismic mass (2, 102, 202) at a point through which the pivot axis (Z) passes.

11. The in-plane MEMS or NEMS detection device according to one of claims 1 to 10, comprising two piezoresistive gauges (308, 308', 408, 408') mounted as a differential symmetrically with respect to said plane, said gauges (408, 408') being advantageously mounted as a differential is associated with a Wheatstone half-bridge mounting.

12. The in-plane MEMS or NEMS detection device according to one of claims 1 to 11, wherein the current flows between the embedding pad (12) of at least one piezoresistive gauge (8) and an embedding pad (6) of the beam, via the piezoresistive gauge (8) and a hinge (11) of the seismic mass with respect to the substrate about the axis (Z).

13. A method for making the in-plane MEMS or NEMS detection device according to one of the preceding claims, this method comprising, on a substrate:

- forming a first thin area, having a first thickness ($E_2$) forming at least one piezoresistive gauge;

- forming a second thick area, having a second thickness ($E_1$) higher than the first thickness ($E_2$) higher than the first, forming at least one seismic mass,

- forming a third area, called hinge area configured to form the suspension and articulation means of the seismic mass with respect to the substrate, with a thickness between that of the first area and that of the second area, in such manner that the suspension and articulation means comprise one beam or several beams to the substrate at an area or at areas distinct from that by which the suspended gauge is connected to the substrate

14. The method according to claim 13, wherein the first thin area is made by forming a portion of a second sacrificial layer within a layer (22) of semi-conducting material, and etching this portion and a first sacrificial layer.

15. The method according to claim 14, wherein forming one portion of a second sacrificial layer within a layer (22) of the semi-conducting material comprises:

- etching a first layer of semi-conducting material which is located on the first sacrificial layer,
- depositing and etching the second sacrificial layer to define said portion,
- making a second layer of semi-conducting, conducting or insulating material.

16. The method according to claim 15, wherein making the second layer of semi-conducting material on said portion is achieved by epitaxial growth of a semi-conducting material.

17. The method to one of claims 13 to 16,, wherein the first area and the third area are obtained by etching steps independent from each other.

18. The method according to claim 17, wherein etching of the third area is performed before etching the first and second areas, for example through DRIE.

FIG. 1A

FIG. 1B

FIG. 2

FIG. 3

FIG. 4

FIG. 5

FIG. 5'

FIG. 6

FIG. 7

## FIG. 8A

28 — 30
26

## FIG. 8B

32.1   32
28 — 30
26

## FIG. 8C

34.1   34.2   34.1   34
28 — 30
26
32.1

FIG. 8D

FIG. 8E

FIG. 8F

FIG. 8G

FIG. 9A

FIG. 9B

**FIG. 9C**

**FIG. 9D**

**FIG. 9E**

138 140 140

128

132.1

## FIG. 9F

138 8 2

128 126

## FIG. 9G

128 130
126

## FIG. 10A

132.1

128

130

126

## FIG. 10B

134

128

130

126

## FIG. 10C

134

132.1

128

130

## FIG. 10D

FIG. 10E

FIG. 10F

FIG. 10G

FIG. 10H

FIG. 11

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 20070084041 A
- WO 9215018 A
- US 4809552 A

**Littérature non-brevet citée dans la description**

- Single-mask SOI fabrication process for linear and angular piezoresistive accelerometers with on-chip reference resistors. **JESPER EKLUND, E. ; SHEKE1, A.M. -.** Sensors. IEEE, 30 Octobre 2005, 656-659